# EUROPEAN PATENT SPECIFICATION

(11) **EP 3 492 831 B1**
(45) Date of publication and mention of the grant of the patent: **12.05.2021**
(21) Application number: 18209070.4
(22) Date of filing: 29.11.2018
(51) Int. Cl.: F24F 13/14, F24F 13/15, F24F 13/075, B60H 1/34, F24F 13/24, F16K 1/22

(54) **REGISTER**
REGISTER
REGISTRE

(30) Priority: 30.11.2017 JP 2017230760
(43) Date of publication of application: 05.06.2019
(73) Proprietor: TOYOTA JIDOSHA KABUSHIKI KAISHA, Toyota-shi, Aichi-ken, 471-8571 (JP)
(72) Inventor: HAYASHIMA, Misako, TOYOTA-SHI, AICHI-KEN, 471-8571 (JP); KARIYA, Yuji, TOYOTA-SHI, AICHI-KEN, 471-8571 (JP); MAKIMURA, Hidekazu, TOYOTA-SHI, AICHI-KEN, 470-0496 (JP)
(74) Representative: Cabinet Beau de Loménie

(56) References cited:
- EP-A1- 0 884 542
- DE-A1-102007 016 184
- JP-A- H11 141 494
- US-B2- 6 589 110

## Description

### BACKGROUND OF THE INVENTION

### 1. FIELD OF THE INVENTION

The present invention relates to a register to be used for an air outlet for ventilation and air conditioning of the interior of an automobile, etc., and specifically, to a register capable of preventing formation of large eddying flows inside the register and reducing occurrence of wind noise of the register.

### 2. DESCRIPTION OF RELATED ART

As a register to be used for an air outlet for ventilation and air conditioning of the interior of an automobile, conventionally, a register described in JP09-202133 A is known which includes a retainer having an air supply passage formed inside, and an air blowing direction adjusting blade disposed inside the air supply passage. This register has a plurality of notched portions formed at an upstream edge portion and/or a downstream edge portion of the air blowing direction adjusting blade with respect to supplied air, and these notched portions actively disturb the supplied air flows and form irregular and small eddying flows to prevent formation of large eddying flows inside the register. Accordingly, this register reduces wind noise of the register.

An air flow control structure to reduce wind noise described in JP11-153342 A is known although this is an air flow control structure for an indoor unit for an air conditioner. This air flow control structure reduces occurrence of wind noise by forming a large number of small-sized eddying flows in an air flowing direction by a serration structure, which is formed as an edge portion of an existing structural body.

In recent years, automobiles using motors with less noise as motive power are increasing, and by reducing noise occurring from respective portions of an automobile, noise reduction in the entire automobile has been promoted. A register disposed in the interior of an automobile blows conditioned air to occupants, and by turning a movable fin upward, downward, leftward, or rightward, an air blowing direction is adjusted. Air blowing is accompanied by wind noise, and wind noise of the register noticeably occurs when the movable fin is turned at a maximum turning angle upward, downward, leftward, or rightward. Therefore, there is a demand for the register to reduce wind noise at an angle near the maximum turning angle of the movable fin.

However, the conventional register described in JP09-202133 A can prevent formation of large eddying flows by a plurality of notched portions formed in the air blowing direction adjusting blade (movable fin), and eventually reduce wind noise of the register, but is not devised to reduce wind noise in a state where the movable fin is turned upward, downward, leftward, or rightward from the front side.

That is, when the movable fin is largely turned upward, downward, leftward, or rightward from the front side, the attack angle of the movable fin to air changes, and a contact area of air with flat surfaces in a thickness direction of the movable fin in which the notched portions are formed increases. Air flowing on the front surface of the movable fin easily synchronizes with a flow in the same direction due to the increase in contact area with the flat surfaces in the thickness direction of the movable fin when the air comes into contact with the movable fin, and an eddying flow is easily formed at an edge of the movable fin. Because an eddying flow of air is formed, the conventional register has a problem in which when the movable fin is largely turned upward, downward, leftward, or rightward from the front side, wind noise increases.

On the other hand, in an air flow control structure described in JP11-153342 A, by forming a serration structure as an edge portion of a structural body, small-sized eddying flows are formed to prevent formation of large eddying flows, and eventually, occurrence of wind noise can be reduced. However, the conventional air flow control structure has a problem in which, when the movable fin is largely turned upward, downward, leftward, or rightward from the front side, the attack angle of the movable fin to air changes, a contact area of air with flat surfaces in the thickness direction of the movable fin on which serrations are formed increases, and as a result, wind noise increases as in the case of the register described in JP09-202133 A

Document DE102007016184 A1 describes the features of the preamble of claim 1.

### SUMMARY OF THE INVENTION

An object of the present invention is to provide a register capable of reducing wind noise when a movable fin is largely turned upward, downward, leftward, or rightward from the front side.

The object of the present invention is achieved by a register configured as described below.

That is, a register according to the present invention is a register including:
a retainer having a ventilation passage inside, and a louver including a plurality of juxtaposed fins provided turnably inside the ventilation passage to adjust an air blowing direction, wherein
a serrated portion including a large number of juxtaposed serrations is formed on an edge portion on an upstream side of the fin, and
angle portions forming outlines of all of the serrations are roundly chamfered to form chamfered portions on the entire outlines.

According to the register of the present invention, on an edge portion on the fin upstream side, a serrated portion is formed, and angle portions forming outlines of all of the serrations are roundly chamfered to form chamfered portions on the entire outlines. Therefore, in a thickness direction of the edge portion on the upstream side of the fin formed of the serrated portion, flat surfaces are very small or non-existent. Accordingly, when a plurality of fins are largely turned upward, downward, leftward, or rightward from the front side and the attack angles of the fins to air are changed, most of air flowing in the ventilation passage comes into contact with curved surfaces when flowing at the edge portion on the upstream side of the fin, and hardly comes into contact with flat surfaces. That is, air flowing in the ventilation passage flows on curved front surfaces of the roundly chamfered serrations on the edge portion on the fin upstream side, and the air flows are hardly synchronized with each other, so that generated eddying flows become fine, and wind noise when the fins are largely turned upward, downward, leftward, or rightward from the front side can be reduced.

Here, the register described above can be configured so that a radius of curvature of a cross section of the chamfered portion is 1/8 to 4 times as long as a length in a thickness direction of the fin on which the chamfered portion is formed.

Accordingly, an eddying flow generated from air coming into contact with the fin becomes fine, so that wind noise when the fin is turned upward, downward, leftward, or rightward can be reduced.

The register described above can also be configured so that a height of the serration of the serrated portion is 2 to 15 mm.

With this configuration, while wind noise when the fin is turned upward, downward, leftward, or rightward is reduced, directivity of air blowing can be secured.

The register described above can also be configured so that a pitch between the serration and the serration of the serrated portion is 2 to 12 mm.

With this configuration, wind noise can be reduced.

The register described above can also be configured so that a width of the fin in a ventilation direction is 10 to 40 mm.

With this configuration, directivity of air blowing can be secured.

### BRIEF DESCRIPTION OF THE DRAWINGS

Fig. 1 is a front view of a register according to a first embodiment of the present invention.
Fig. 2 is a back view of the same register.
Fig. 3A is a left side view of the same register, and Fig. 3B is a plan view of the same.
Fig. 4 is a perspective view of the same register viewed from the front side.
Fig. 5 is a perspective view of the same register viewed from the back side.
Fig. 6 is an exploded perspective view of the same register.
Fig. 7A is a plan view of a vertical fin, and Fig. 7B is a left side view with a partially enlarged view of the vertical fin.
Fig. 8A is a front view of the vertical fin, and Fig. 8B is a back view with a partially enlarged view of the vertical fin.
Fig. 9A is a perspective view of the vertical fin viewed from the front side, and Fig. 9B is a perspective view with a partially enlarged view of the vertical fin viewed from the back side.
Fig. 10A is an enlarged sectional view taken along A-A in Fig. 9, Fig. 10B is an enlarged sectional view taken along B-B in Fig. 9, and Fig. 10C is an enlarged sectional view taken along C-C in Fig. 9.
Fig. 11 is an exploded perspective view of a rear movable louver.
Fig. 12A is a plan view of vertical fins and a link bar, and Fig. 12B is a front view of the vertical fins and the link bar.
Fig. 13A is a perspective view of the vertical fins and the link bar viewed from the front side, and Fig. 13B is a perspective view of the vertical fins and the link bar viewed from the back side.
Fig. 14A is an exploded perspective view of a front movable louver, and Fig. 14B is a perspective view of the front movable louver viewed from the front side.
Fig. 15 is a sectional view taken along XV-XV in Fig. 1 when the vertical fins are directed to the front side.
Fig. 16 is a sectional view taken along XV-XV in Fig. 1 when the vertical fins are turned leftward.
Fig. 17 is a sectional view taken along XV-XV in Fig. 1 when the vertical fins are turned rightward.
Fig. 18 is a perspective view of the same register viewed from the front side when the vertical fins are turned leftward in a state where the front movable louver is removed.
Fig. 19A is a sectional view taken along XIX-XIX in Fig. 1 when horizontal fins are directed horizontally, Fig. 19B is a sectional view taken along XIX-XIX in Fig. 1 when the horizontal fins are turned upward, and Fig. 19C is a sectional view taken along XIX-XIX in Fig. 1 when the horizontal fins are turned downward.
Fig. 20 is a graph showing a directivity tolerance with respect to a height of serrations of the serrated portion and a leftward/rightward turning angle of the vertical fins, and a graph showing a noise tolerance with respect to a height of serrations of the serrated portion and a leftward/rightward turning angle of the vertical fins.
Fig. 21 is a left side view of a vertical fin according to a second embodiment of the present invention.
Fig. 22 is a left side view of a vertical fin according to a third embodiment of the present invention.

### DESCRIPTION OF THE PREFERRED EMBODIMENTS

Hereinafter, the present invention is described based on embodiments shown in the drawings. The present invention is not limited to the embodiments. Various changes may be made without departing from the scope of the invention as defined in the claims.

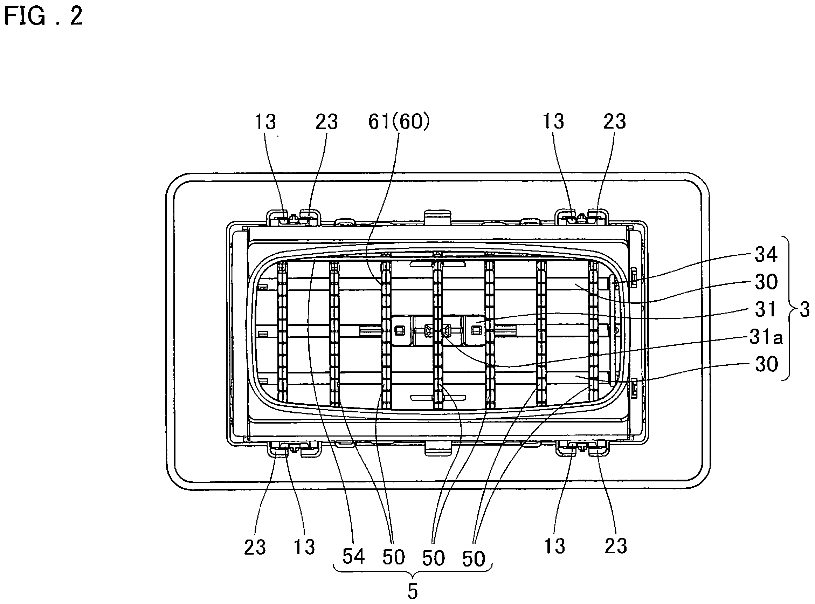

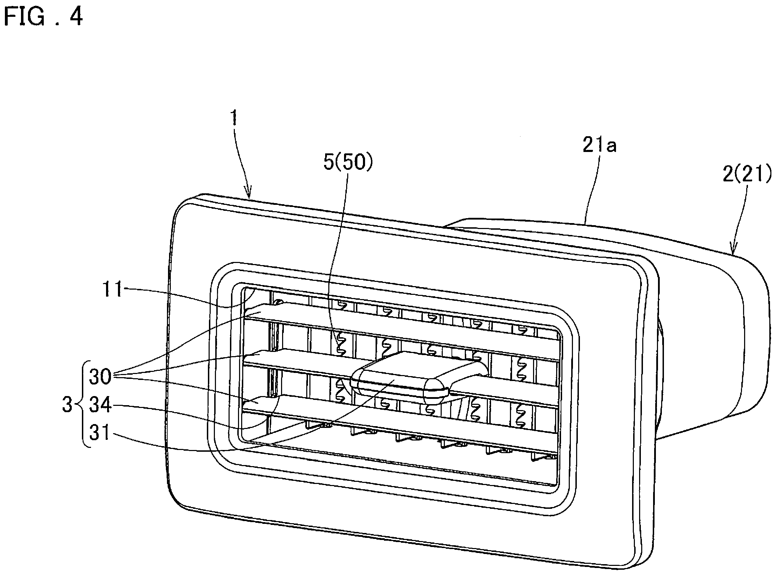

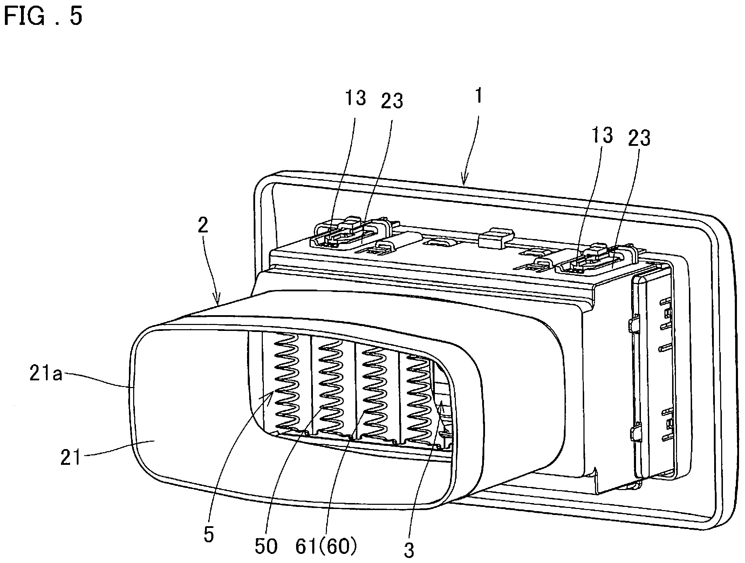

A register according to a first embodiment has, as shown in Fig. 4, a duct shape substantially square in section, and includes a ventilation passage 21 inside, a retainer 2 serving as a housing, and a bezel 1 fitted to a front portion of the retainer 2. Inside the retainer 2, the ventilation passage 21 and an air outlet 11 of the bezel 1 are provided so as to communicate with each other. Inside (upstream side) the air outlet 11, a front movable louver 3 and a rear movable louver 5 constituting a cross-fin type register are provided by disposing fins orthogonal to each other. As shown in Fig. 2 and Fig. 5, on an edge portion on an upstream side of each fin 50 of the rear movable louver 5, a serrated portion 60 including a large number of juxtaposed serrations 61 is formed. In the register according to the first embodiment, the serrated portion 60 is provided on the upstream side of each fin 50 of the rear movable louver 5, however, it is also possible that a serrated portion is provided on the upstream side of each fin 30 of the front movable louver 3, or a serrated portion may be additionally provided on the upstream side of each fin 30 of the front movable louver 3 as well as on the upstream side of each fin 50 of the rear movable louver 5. In the present specification, front and rear sides of each portion of the register are defined so that the front side is an outlet side (downstream side), and the rear side is an inlet side (upstream side), and the upper, lower, left, and right sides are the same as those viewed by an occupant in a seated state.

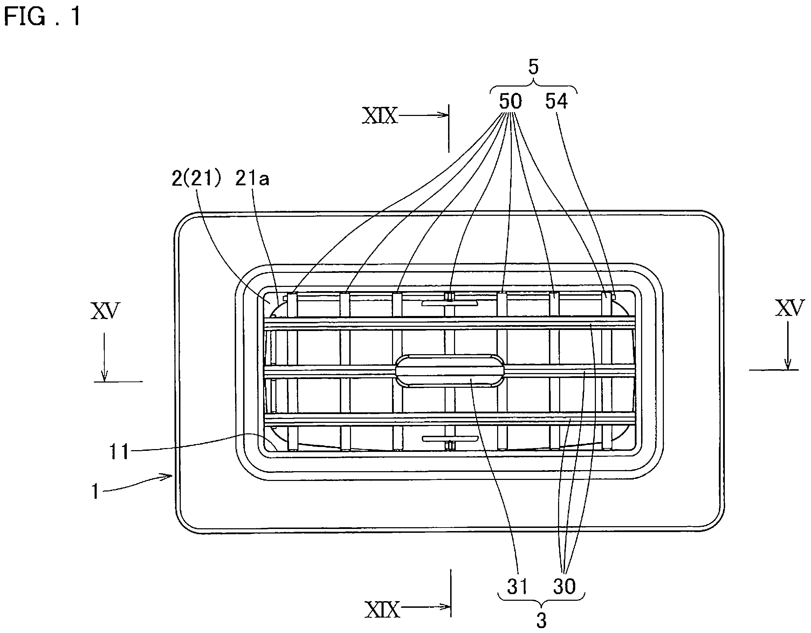

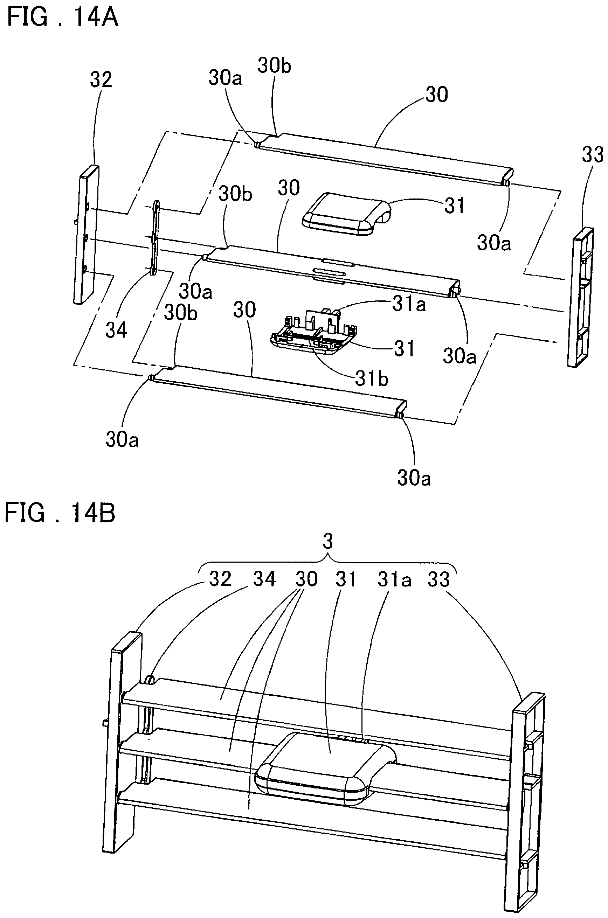

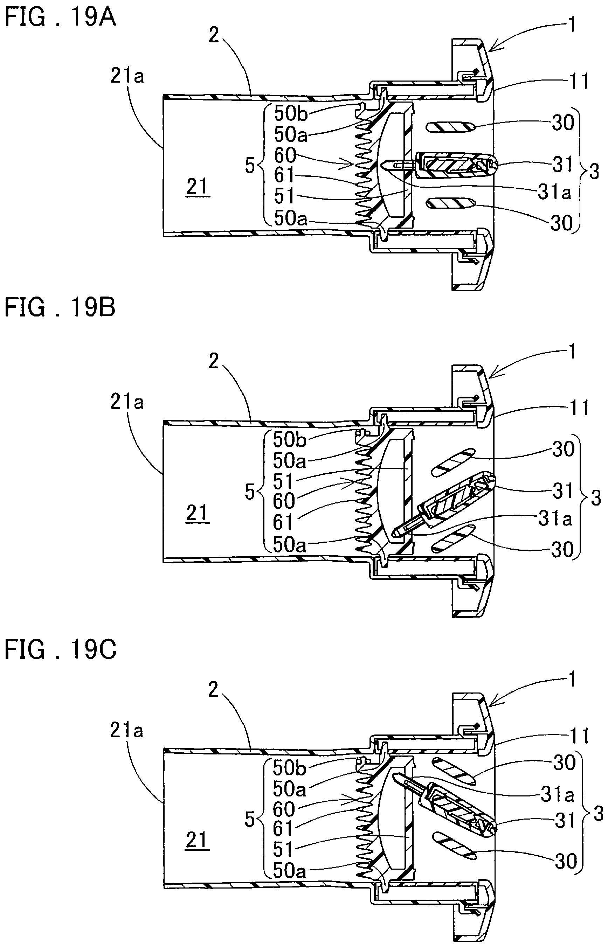

As shown in Fig. 1 and Fig. 4, the front movable louver 3 is provided at a front portion side inside the retainer 2. As shown in Figs. 14, three horizontal fins 30 are axially supported to be turnable (tiltable up and down) via fin pivots 30a provided on both left and right end portions. To make the fin pivots 30a of the fins 30 turnable, the left and right fin pivots 30a of each fin 30 are axially supported by a left bearing portion 32 and a right bearing portion 33. The respective fins 30 are structured so that connecting shafts 30b of the respective fins 30 are connected by one link bar 34, and all fins 30 can change their directions upward or downward in synch with each other (Figs. 19).

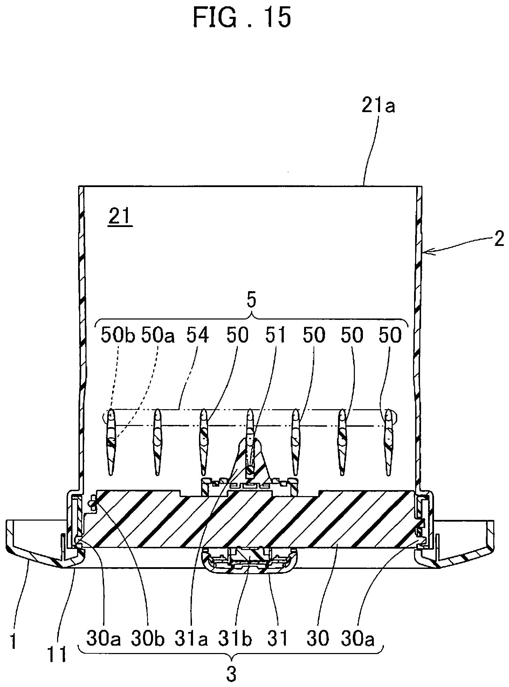

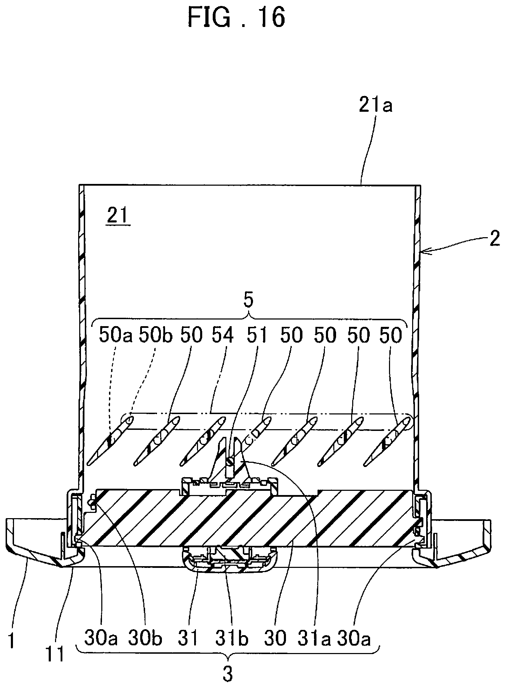

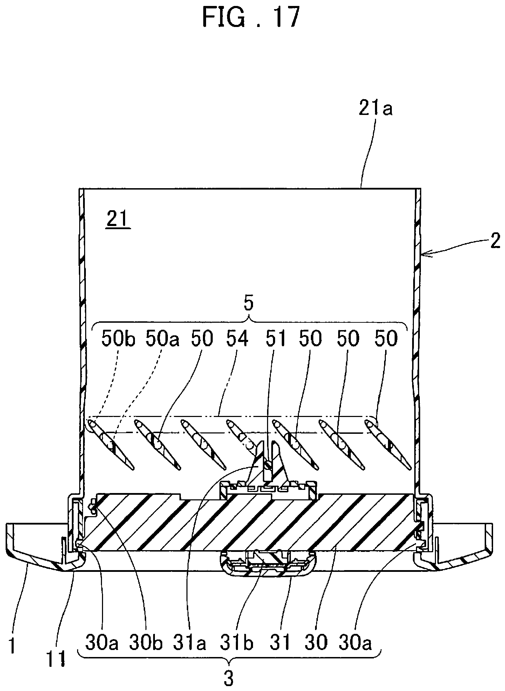

Onto the central fin 30 in the up-down direction, as shown in Figs. 14, a slide knob 31 is fitted so as to be slidable leftward and rightward. At a rear portion of the slide knob 31, a rack-shaped coordinating portion 31a is provided, and the coordinating portion 31a tilts each fin 50 of the rear movable louver 5 described later leftward or rightward. Accordingly, as shown in Figs. 19, with a finger put on the slide knob 31, the front movable louver 3 can be tilted up or down, and as shown in Fig. 15 to Fig. 17, by sliding the slide knob 31 in the left-right direction, the rear movable louver 5 can be tilted leftward or rightward. Upper and lower portions of the slide knob 31 are separately molded from a synthetic resin, and fitted to the central fin 30 from the upper and lower sides in a leftward/rightward slidable manner. Into a fixed position on a front side inside the slide knob 31, a load applying member 31b formed of an elastic member such as a rubber elastic body is fitted (Fig. 14A). By fitting the slide knob 31 to the central fin 30 from the upper and lower sides in a leftward/rightward slidable manner, as shown in Fig. 15 to Fig. 17, a load applying member 31b comes into contact with the front portion of the fin 30, and accordingly, the slide knob 31 fitted onto the fin 30 is subjected to an appropriate operation load and becomes slidable.

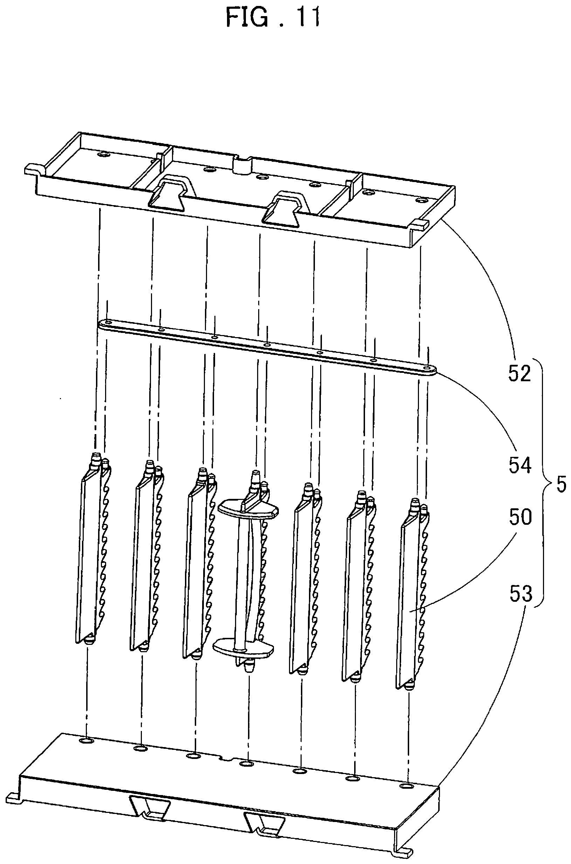

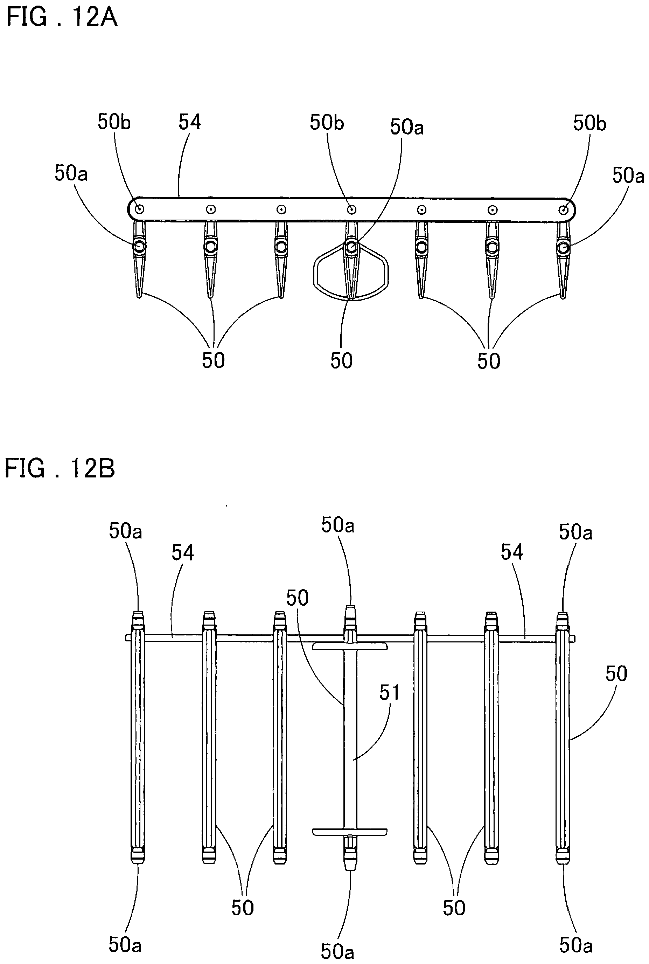

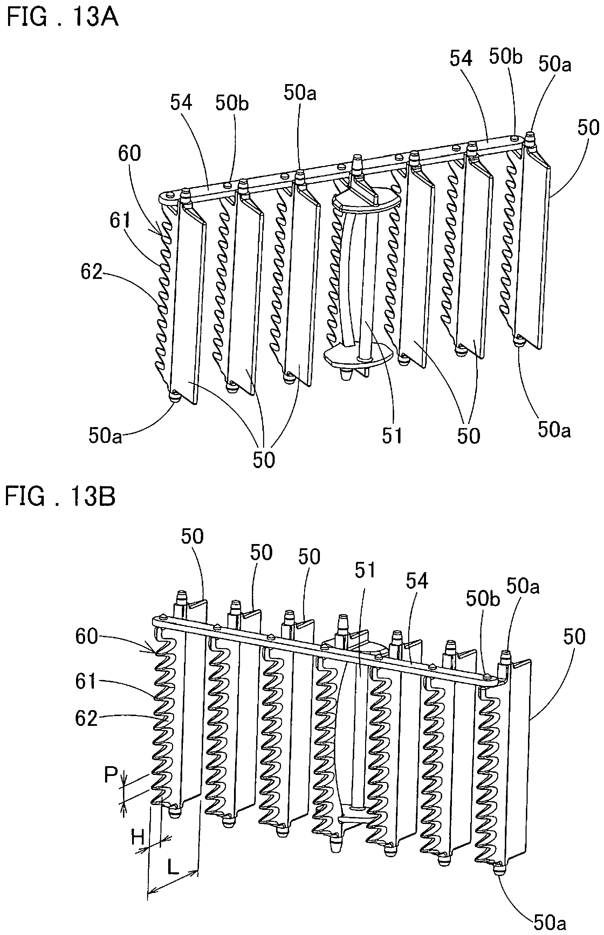

Inside the retainer 2 at the rear side of the front movable louver 3, as shown in Fig. 2 and Fig. 5, the rear movable louver 5 is provided. In the rear movable louver 5, as shown in Figs. 12 and Figs. 13, seven fins 50 are disposed in the vertical direction at intervals, and as shown in Fig. 11, each fin 50 is axially supported turnably on an upper bearing portion 52 and a lower bearing portion 53 disposed on the upper and lower sides via upper and lower fin pivots 50a of the fins 50. On an upper end side of each fin 50, a connecting shaft 50b is provided to project, and to the connecting shafts 50b, a link bar 54 is connected so as to make a structure in which all fins 50 can change their directions leftward or rightward in synch with each other (Fig. 15 to Fig. 17).

At a front portion of one fin 50 positioned at the center in the left-right direction of the rear movable louver 5, a coordinated portion 51 to be coordinated with the coordinating portion 31a of the slide knob 31 is provided (Figs. 13, Figs. 19) so as to make a structure in which, as shown in Fig. 15 to Fig. 17, when the slide knob 31 is slid in the left-right direction, the directions of the respective fins 50 of the rear movable louver 5 are respectively adjusted leftward or rightward. Accordingly, by an upward or downward turning operation of the slide knob 31, the directions of the respective fins 30 of the front movable louver 3 are adjusted upward or downward, and by a leftward or rightward sliding operation of the slide knob 31, the directions of the respective fins 50 of the rear movable louver 5 are adjusted leftward or rightward.

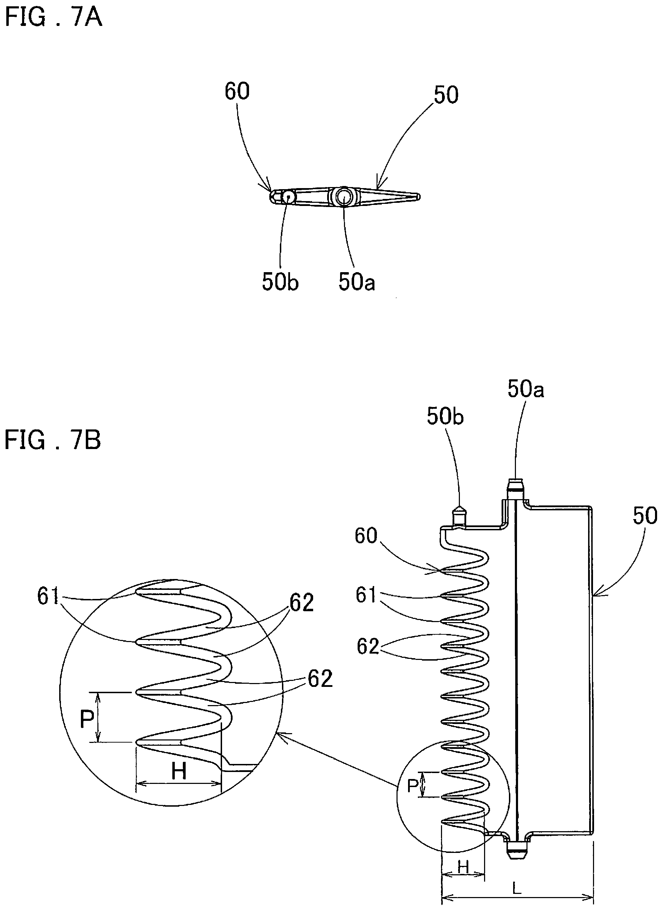

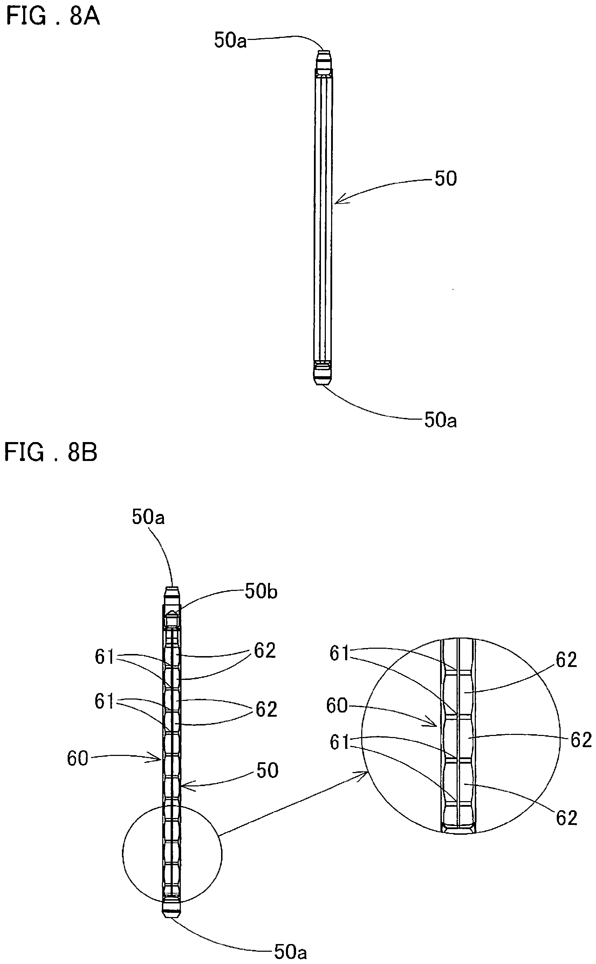

On an edge portion on an upstream side of each fin 50 of the rear movable louver 5, as shown in Figs. 7 to Figs. 9 and Figs. 13, a serrated portion 60 having a large number of juxtaposed serrations 61 is formed. By forming the serrated portion 60 on an edge portion on the upstream side of the fin 50, a supplied air flow is actively disturbed by the serrated portion 60 and irregular and small eddying flows are formed, large eddying flows are prevented from being formed inside the register, and wind noise of the register is decreased by half.

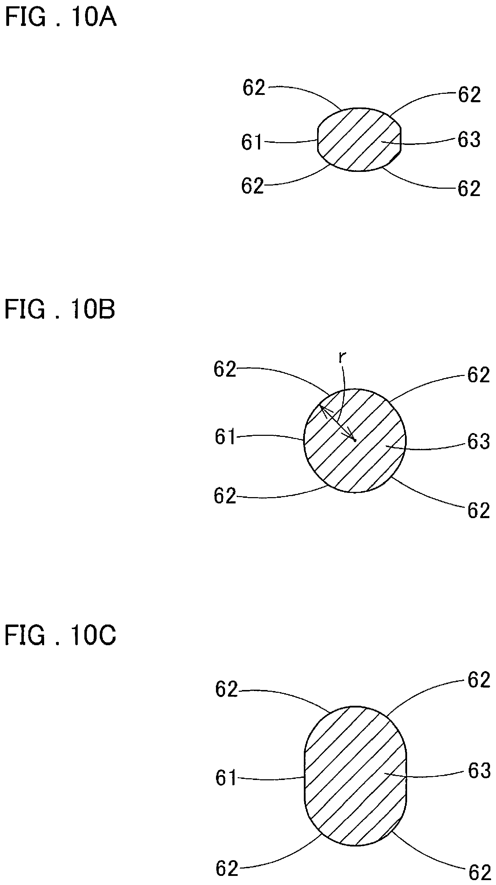

By entirely roundly chamfering angle portions forming outlines of all serrations 61, chamfered portions 62 are formed over the entire outlines of the serrations 61 (Figs. 7 to Figs. 10). That is, for example, as shown in Fig. 10B, by entirely roundly chamfering the serrations 61, cross sections 63 at the central portions of the serrations 61 become substantially circular cross sections 63 with a radius r of curvature. Accordingly, when the plurality of fins 50 are largely turned leftward or rightward from the front side and the attack angles of the fins 50 to air are changed, most of air flowing in the ventilation passage 21 comes into contact with curved surfaces when flowing at the edge portions on the upstream sides of the fins 50, and hardly comes into contact with flat surfaces. That is, air flowing in the ventilation passage 21 flows on curved front surfaces of the roundly chamfered serrations 61 being edge portions on the upstream sides of the fins 50, and the air flows hardly synchronize with each other, so that generated eddying flows become fine, and accordingly, wind noise when the respective fins 50 of the rear movable louver 50 are largely turned leftward or rightward can be reduced.

The radius r of curvature of the cross section 63 of the chamfered portion 62 is preferably a length that is 1/8 to 4 times as long as a length in a thickness direction of the fin 50 on which the chamfered portion 62 is formed. This is because generated eddying flows become fine and wind noise can be reduced. When the radius r of curvature of the cross section 63 of the chamfered portion 62 is less than 1/8 times as long as a length of the fin 50 in the thickness direction, the chamfered portion 62 cannot fully cover the thickness of the fin 50, and a flat surface is present on the front surface of the serration 61 on the edge portion on the upstream side of the fin 50. Air flows flowing in the ventilation passage 21 easily synchronize with each other due to the flat front surfaces on the surfaces of the serrations 61 when flowing at the edge portions of the fins 50, and therefore, not fine eddying flows but large eddying flows are easily formed. Therefore, there is a possibility that wind noise when the fins 50 are largely turned leftward or rightward cannot be reduced. On the other hand, when the radius r of curvature is over 4 times as long as the length of the fin 50 in the thickness direction of the fin 50, the chamfered portion 62 becomes a substantially flat surface, and a substantially flat surface is present on the front surface of the serration 61 on the edge portion of the fin 50. Air flows flowing in the ventilation passage 21 easily synchronize with each other due to the substantially flat surfaces on the front surfaces of the serrations 61 when flowing at the edge portions of the fins 50, and therefore, not fine eddying flows but large eddying flows are easily formed. Therefore, there is a possibility that wind noise when the fins 50 are largely turned leftward or rightward cannot be reduced. More preferably, the radius r of curvature of the cross section 63 of the chamfered portion 62 is a length that is 1/4 to 2 times as long as the length in the thickness direction of the fin 50 on which the chamfered portion 62 is formed.

Figs. 10 are views showing the cross section 63 in the left-right direction of the serration 61 of the serrated portion 60. As shown in Figs. 10, in the register of the first embodiment, the radius r of curvature of the cross section 63 of the chamfered portion 62 is set to a length that is substantially 1/2 times as long as the length in the thickness of the fin 50 on which the chamfered portion 62 is formed. Therefore, a cross section 63 in the left-right direction at a portion at which the length in the thickness direction (left-right direction) of the fin 50 and the length in the width direction (up-down direction) of the serration 61 are equal to each other is, as shown in Fig. 10B, a substantially circular cross section 63. On a tip end side (rear side) of the serration 61 relative to Fig. 10B, the cross section 63 in the left-right direction assumes, as shown in Fig. 10A, a shape formed by overlaying two arcs smaller than semicircles one above the other so as to become convex, and on a root side (front side) of the serration 61 relative to Fig. 10B, the cross section 63 in the left-right direction assumes a shape obtained by stretching in the up-down direction a chord in the left-right direction passing through the center of a circle as shown in Fig. 10C.

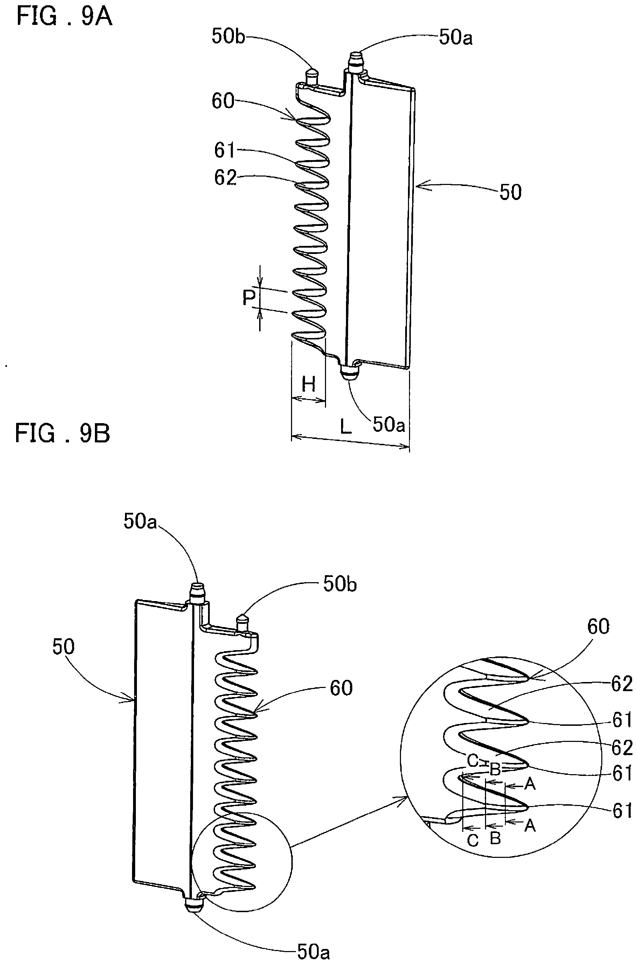

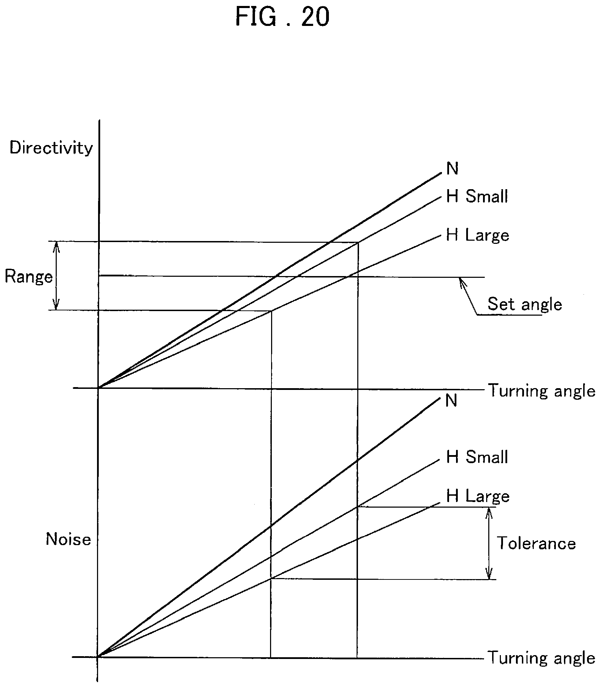

A height H (Fig. 7B, Fig. 9A) of the serration 61 of the serrated portion 60 is preferably 2 to 15 mm. This is because directivity of air blowing can be secured while wind noise when the plurality of fins 50 are largely turned leftward or rightward from the front side is reduced. If the height H of the serration 61 is less than 2 mm, although directivity of air blowing can be secured, it becomes difficult to reduce wind noise in this case. On the other hand, if the height H of the serration 61 is more than 15 mm, although wind noise can be reduced, it becomes difficult to secure directivity of air blowing. More preferably, the height H of the serration 61 is 3 to 10 mm, and still more preferably, 4 to 6 mm. Fig. 20 is a graph of relationships between an air blowing turning angle and a noise tolerance, and between an air blowing turning angle and directivity of air blowing, with respect to the height H of the serration 61.

A pitch P (Fig. 7B, Fig. 9A) between the serration 61 and the serration 61 of the serrated portion 60 is preferably 2 to 12 mm. By setting the pitch P between the serration 61 and the serration 61 of the serrated portion 60 to 2 to 12 mm, the serrated portion 60 actively disturbs supplied air flows to form irregular and small eddying flows, and accordingly, formation of large eddying flows inside the register is prevented, so that wind noise of the register can be reduced. If the pitch P between the serration 61 and the serration 61 of the serrated portion 60 is less than 2 mm, the interval between the serration 61 and the serration 61 adjacent to each other is narrow, and air flows flowing between the serrations synchronize with each other to generate large eddying flows, and wind noise may not be reduced. On the other hand, if the pitch P is more than 12 mm, the pitch P is so large that it becomes difficult for the serrated portion 60 to form irregular and small eddying flows, and wind noise may not be reduced. More preferably, the pitch P between the serration 61 and the serration 61 of the serrated portion 60 is 4 to 8 mm, and still more preferably, 5 to 7 mm.

A width L of the fin 50 in a ventilation direction is preferably 10 to 40 mm. This is because directivity of air blowing can be secured and occurrence of resonance sound can be suppressed. If the width L of the fin 50 in the ventilation direction is less than 10 mm, due to the short width L, directivity of air blowing may not be secured. On the other hand, when the width L is more than 40 mm, due to the long width L, a resonance sound with harsh noise (5000 Hz or less) may be generated. More preferably, the width L of the fin 50 in the ventilation direction is 15 to 30 mm, and still more preferably, 18 to 25 mm.

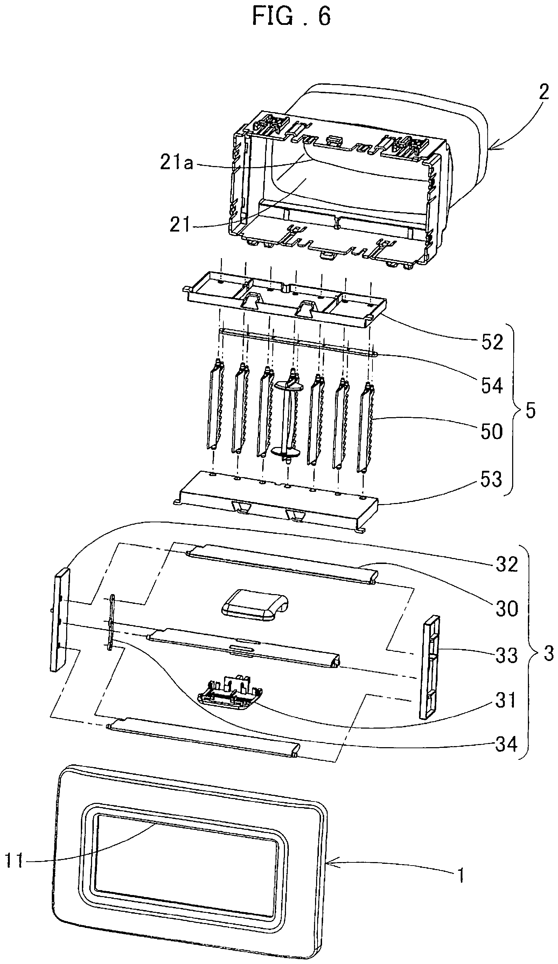

When manufacturing the register, as shown in Fig 6, to the upstream side inside the retainer 2, from the front side, the rear movable louver 5 is fitted by inserting the upper bearing portion 52 and the lower bearing portion 53 to an upper wall portion and a lower wall portion inside the retainer 2. To the downstream side of the rear movable louver 5, the front movable louver 3 is fitted by inserting the left bearing portion 32 and the right bearing portion 33 to a left wall portion and a right wall portion inside the retainer 2.

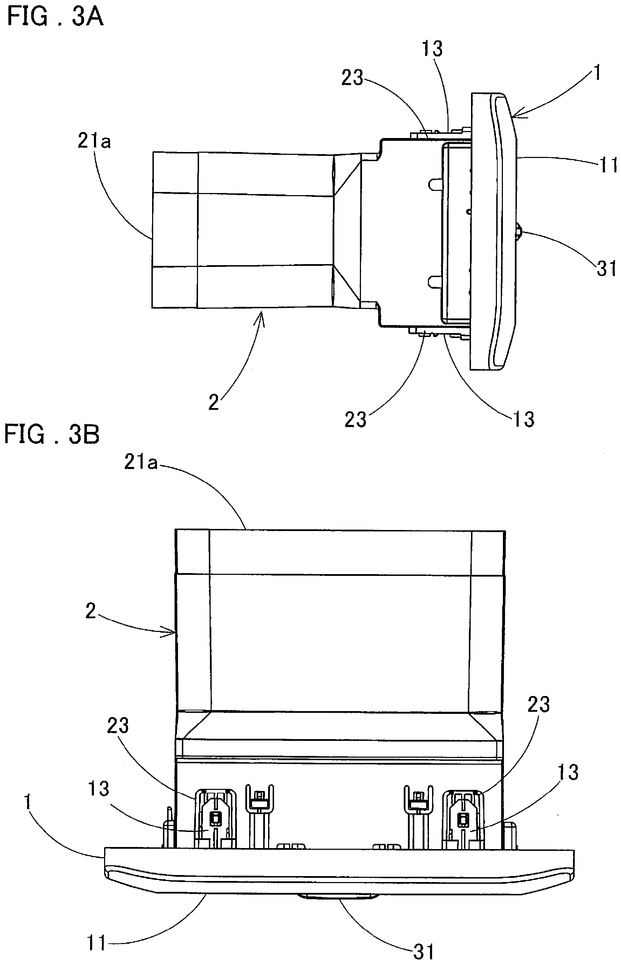

Last, the bezel 1 is fitted to the front portion of the retainer 2. As shown in Fig. 3B, the bezel 1 is fitted to the front portion of the retainer 2 by latching claws 13 of the bezel onto latching claw receivers 23 of the retainer 2, and accordingly, assembling is completed. In this state, the coordinating portion 31a of the slide knob 31 of the front movable louver 3 engages with the coordinated portion 51 of the central fin 50 of the rear movable louver 5 (Fig. 15 to Fig. 17, and Figs. 19). Accordingly, an operator can adjust the directions of the respective fins 30 of the front movable louver 3 upward or downward by turning the slide knob 31 upward or downward, and can adjust the directions of the respective fins 50 of the rear movable louver 5 leftward or rightward by sliding the slide knob 31 leftward or rightward. That is, an air blowing-out direction can be adjusted in the up-down direction and the horizontal direction with the slide knob 31.

The register configured as described above is fitted to a portion of an instrumental panel or a dashboard inside an automobile so that an air inlet 21a of the retainer 2 is connected to a ventilation duct not shown in the drawings. Air delivered from the ventilation duct is blown out from the ventilation passage 21 inside the retainer 2 through the air outlet 11.

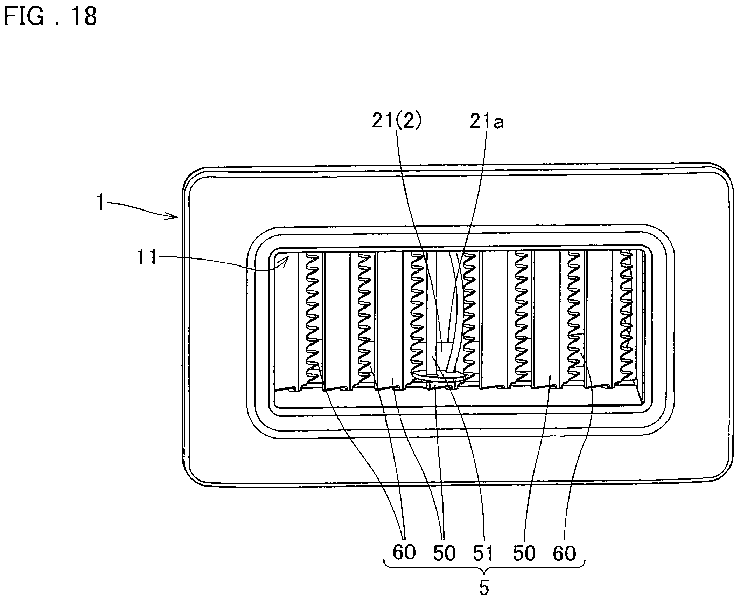

In the case of adjustment of the air blowing-out direction upward or downward, when the slide knob 31 is operated upward or downward, as shown in Figs. 19, the respective fins 30 of the front movable louver 3 turn upward or downward around the fin pivots 30a and change their directions upward or downward, and the air blowing-out direction of the register is accordingly adjusted upward or downward. In the case of adjustment of the air blowing-out direction leftward or rightward, when the slide knob 31 is slid leftward or rightward, as shown in Fig. 15 to Fig. 17, the coordinating portion 31a at the rear portion of the slide knob 31 turns one fin 50 positioned at the center in the left-right direction of the rear movable louver 5 leftward or rightward via the coordinated portion 51. Directions of all fins 50 of the rear movable louver 5 are changed in the left-right direction in a predetermined angle range via the link bar 54 (Figs. 12), and the air blowing-out direction of the register is accordingly adjusted leftward or rightward. Fig. 18 is a view showing a state where the rear movable louver 5 (fins 50) is turned leftward in a state where the front movable louver 3 is removed.

At this time, on the edge portion on the upstream side of each fin 50, the serrated portion 60 including a large number of juxtaposed serrations 61 is formed, and by roundly chamfering angle portions forming outlines of all serrations 61, chamfered portions 62 are formed. Therefore, in the thickness direction of the end portion on the upstream side of the fin 50 formed of the serrated portion 60, flat surfaces are very small or non-existent. Accordingly, when the plurality of fins 50 are largely turned leftward or rightward from the front side and the attack angles of the fins 50 to air are changed, most of air flowing in the ventilation passage 21 comes into contact with curved surfaces when flowing at the edge portions on the upstream sides of the fins 50, and hardly comes into contact with flat surfaces. That is, air flowing in the ventilation passage 21 flows on the curved front surfaces of the roundly chamfered serrations 61 being the edge portion on the upstream side of the fin 50, and the air flows hardly synchronize with each other, so that generated eddying flows become fine, and wind noise when the fins 50 of the rear movable louver 5 are largely turned leftward or rightward can be reduced.

Moreover, the radius r of curvature of the cross section 63 of the chamfered portion 62 is a length that is 1/8 to 4 times as long as the length in the thickness direction of the fin 50 on which the chamfered portion 62 is formed. Accordingly, air that comes into contact with the fins 50 generates fine eddying flows, so that wind noise when the fins 50 are turned leftward or rightward can be reduced.

The height H of the serration 61 of the serrated portion 60 is 2 to 15 mm. Accordingly, directivity of air blowing can be secured while wind noise when the fins 50 are turned leftward or rightward is reduced.

The pitch P between the serration 61 and the serration 61 of the serrated portion 60 is 2 to 12 mm. Accordingly, wind noise can be reduced.

The width of the fin 50 in the ventilation direction is 10 to 40 mm. Accordingly, directivity of air blowing can be secured.

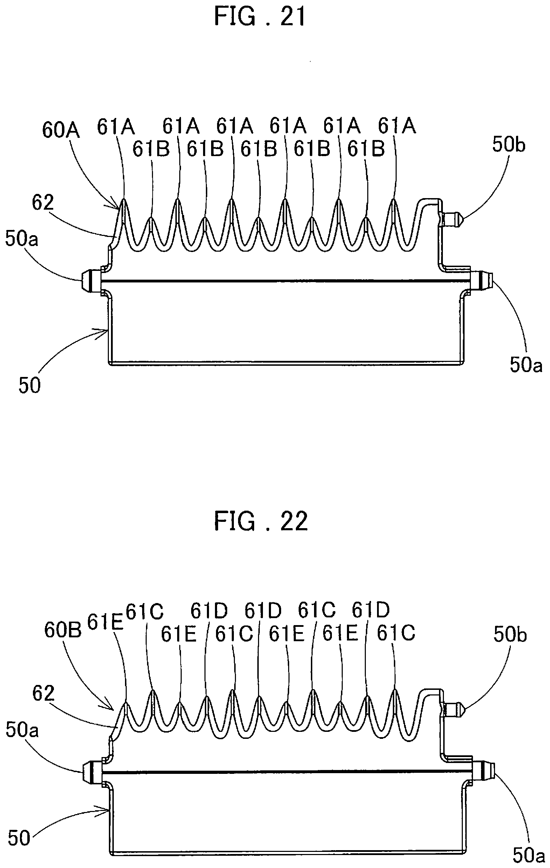

Next, registers according to second and third embodiments of the present invention are described based on the drawings. In these registers, serrations of the serrated portion formed on the edge portion on the upstream side of the fin 50 are not serrations having substantially the same shape and disposed at substantially even pitches P like the serrations 61 of the serrated portion 60 of the first embodiment, but are serrations with different sizes disposed regularly. The serrated portion 60A of the second embodiment is formed by alternately disposing large-sized serrations 61A and small-sized serrations 61B as shown in Fig. 21. Moreover, the serrated portion 60B of the third embodiment is formed by regularly disposing large-sized serrations 61C, medium-sized serrations 61D, and small-sized serrations 61E as shown in Fig. 22. Due to the different shapes of the serrations and different pitches of the large-sized serrations of the serrated portion, in the registers according to the second embodiment and the third embodiment, air flowing in the ventilation passage 21 flows on the front surfaces of the fins 50 in a state where the air flows more hardly synchronize with each other. Therefore, generated eddying flows become finer and more complicated, so that wind noise when the fins 50 are largely turned can be further reduced.

## Claims

1. A register comprising:
a retainer (2) having a ventilation passage (21) inside; and
a louver including a plurality of juxtaposed fins (30) provided turnably inside the ventilation passage (21) to adjust an air blowing direction, wherein
a serrated portion (60) including a large number of juxtaposed serrations (61) is formed on an edge portion on an upstream side of the fin (30), **characterised in that** J
angle portions forming outlines of all of the serrations (61) are roundly chamfered to form chamfered portions (62) on the entire outlines.

2. The register according to Claim 1, wherein a radius (r) of curvature of a cross section (63) of the chamfered portion (62) is 1/8 to 4 times as long as a length in a thickness direction of the fin (30) on which the chamfered portion (62) is formed.

3. The register according to Claim 1 or 2, wherein a height (H) of the serration (61) of the serrated portion (60) is 2 to 15 mm.

4. The register according to any one of the preceding Claims, wherein a pitch (P) between the serration (61) and the serration (61) of the serrated portion (60) is 2 to 12 mm.

5. The register according to any one of the preceding Claims, wherein a width (L) of the fin (30) in a ventilation direction is 10 to 40 mm.

6. The register according to any one of the preceding Claims, wherein as the louver, a rear movable louver (5) is provided inside the ventilation passage (21), and on the rear movable louver (5), the plurality of fins (30) are axially supported to be turnable rightward or leftward via fin pivots (30a) provided on upper and lower sides.

7. The register according to any one of the preceding Claims, wherein in the serrated portion (60A) of the fin (30), large-sized serrations (61A) and small-sized serrations (61B) are alternately disposed.

8. The register according to any one of Claims 1 to 7, wherein in the serrated portion (60B) of the fin (30), large-sized serrations (61C), medium-sized serrations (61D), and small-sized serrations (61E) are regularly disposed.

## Patentansprüche

1. Register, umfassend:
einen Halter (2), der innen einen Belüftungskanal (21) aufweist, und
einen Lüftungsschlitz, der mehrere nebeneinander angeordnete Rippen (30) beinhaltet, die drehbar innen in dem Belüftungskanal (21) vorgesehen sind, um eine Luftblasrichtung einzustellen, wobei
ein gezackter Abschnitt (60), der eine große Anzahl von nebeneinander angeordneten Auszackungen (61) beinhaltet, an einem Randabschnitt auf einer stromaufwärtigen Seite der Rippe (30) ausgebildet ist, **dadurch gekennzeichnet, dass**
Winkelabschnitte, die Umrisse aller Auszackungen (61) bilden, rund abgeschrägt sind, um abgeschrägte Abschnitte (62) auf den gesamten Umrissen zu bilden.

2. Register nach Anspruch 1, wobei ein Krümmungsradius (r) einer Quersektion (63) des abgeschrägten Abschnitts (62) 1/8- bis 4-mal so lang wie eine Länge in einer Dickenrichtung der Rippe (30) ist, auf der der abgeschrägte Abschnitt (62) ausgebildet ist.

3. Register nach Anspruch 1 oder 2, wobei eine Höhe (H) der Auszackung (61) des gezackten Abschnitts (60) 2 bis 15 mm beträgt.

4. Register nach einem der vorhergehenden Ansprüche, wobei ein Abstand (P) zwischen der Auszackung (61) und der Auszackung (61) des gezackten Abschnitts (60) 2 bis 12 mm beträgt.

5. Register nach einem der vorhergehenden Ansprüche, wobei eine Breite (L) der Rippe (30) in einer Belüftungsrichtung 10 bis 40 mm beträgt.

6. Register nach einem der vorhergehenden Ansprüche, wobei als der Lüftungsschlitz ein hinterer bewegbarer Lüftungsschlitz (5) innen in dem Belüftungskanal (21) vorgesehen ist und auf dem hinteren bewegbaren Lüftungsschlitz (5) die mehreren Rippen (30) axial gestützt sind, um durch Rippendrehzapfen (30a), die an der Ober- und der Unterseite vorgesehen sind, nach rechts oder nach links drehbar zu sein.

7. Register nach einem der vorhergehenden Ansprüche, wobei in dem gezackten Abschnitt (60A) der Rippe (30) groß bemessene Auszackungen (61A) und klein bemessene Auszackungen (61B) abwechselnd angeordnet sind.

8. Register nach einem der Ansprüche 1 bis 7, wobei in dem gezackten Abschnitt (60B) der Rippe (30) groß bemessene Auszackungen (61C), mittelgroß bemessene Auszackungen (61D) und klein bemessene Auszackungen (61E) regelmäßig angeordnet sind.

## Revendications

1. Registre comprenant :
un dispositif de retenue (2) ayant un passage de ventilation (21) à l'intérieur ; et
une grille comprenant une pluralité d'ailettes juxtaposées (30) prévues pour pouvoir tourner à l'intérieur du passage de ventilation (21) pour ajuster une direction de soufflage d'air,
une partie dentelée (60) qui comprend un grand nombre de dentelures juxtaposées (61) étant formée sur une partie de bord sur un côté amont de l'ailette (30), **caractérisé en ce que**
des parties anguleuses formant des contours de toutes les dentelures (61) sont chanfreinées de manière arrondie pour former des parties chanfreinées (62) sur les contours entiers.

2. Registre selon la revendication 1, dans lequel un rayon (r) de courbure d'une section transversale (63) de la partie chanfreinée (62) est de 1/8 à 4 fois aussi longue qu'une longueur dans une direction d'épaisseur de l'ailette (30) sur laquelle la partie chanfreinée (62) est formée.

3. Registre selon la revendication 1 ou 2, dans lequel une hauteur (H) de la dentelure (61) de la partie dentelée (60) est de 2 à 15 mm.

4. Registre selon l'une quelconque des revendications précédentes, dans lequel un pas (P) entre la dentelure (61) et la dentelure (61) de la partie dentelée (60) est de 2 à 12 mm.

5. Registre selon l'une quelconque des revendications précédentes, dans lequel une largeur (L) de l'ailette (30) dans une direction de ventilation est de 10 à 40 mm.

6. Registre selon l'une quelconque des revendications précédentes, dans lequel, comme grille, une grille mobile arrière (5) est prévue à l'intérieur du passage de ventilation (21), et sur la grille mobile arrière (5), la pluralité d'ailettes (30) est axialement supportée pour pouvoir tourner vers la droite ou vers la gauche par l'intermédiaire de pivots d'ailette (30a) prévus sur des côtés supérieur et inférieur.

7. Registre selon l'une quelconque des revendications précédentes, dans lequel, dans la partie dentelée (60A) de l'ailette (30), des dentelures de grande taille (61A) et des dentelures de petite taille (61B) sont disposées de manière alternée.

8. Registre selon l'une quelconque des revendications 1 à 7, dans lequel, dans la partie dentelée (60B) de l'ailette (30), des dentelures de grande taille (61C), des dentelures de taille moyenne (61D), et des dentelures de petite taille (61E) sont disposées de manière régulière.
